# EUROPEAN PATENT SPECIFICATION

(11) **EP 3 316 162 B1**
(45) Date of publication and mention of the grant of the patent: **24.02.2021**
(21) Application number: 17198408.1
(22) Date of filing: 25.10.2017
(51) Int. Cl.: G06F 21/32, G06F 21/64, H04L 9/32

(54) **METHOD AND SYSTEM FOR CREATING AN ELECTRONIC SIGNATURE OF A DOCUMENT ASSOCIATED TO A PERSON BY MEANS OF THE VOICE PRINT OF THE PERSON, AND CORRESPONDING METHOD FOR VERIFYING THE ELECTRONIC SIGNATURE**
VERFAHREN UND SYSTEM ZUR ERZEUGUNG UND VERIFIZIERUNG EINER DIGITALEN SIGNATUR MITTELS STIMMABDRUCK
PROCÉDÉ ET SYSTÈME PERMETTANT DE PRODUIRE ET VÉRIFIER UNE SIGNATURE NUMÉRIQUE EN UTILISANT UNE EMPREINTE VOCALE

(30) Priority: 25.10.2016 IT 201600107548
(43) Date of publication of application: 02.05.2018
(73) Proprietor: INFOCERT S.p.A., 00187 Roma (IT)
(72) Inventor: LEONI, Fabrizio, 20133 Milano (IT); BOLDRIN, Luca, 35020 Saonara (IT); MARCOLONGO, Igor, 35038 Torreglia (IT)
(74) Representative: Maccagnan, Matteo

(56) References cited:
- US-A1- 2004 102 959
- US-A1- 2010 131 272
- US-A1- 2015 172 286
- MARJAN GHAZVININEJAD ET AL: "How to Memorize a Random 60-Bit String", PROCEEDINGS OF THE 2015 CONFERENCE OF THE NORTH AMERICAN CHAPTER OF THE ASSOCIATION FOR COMPUTATIONAL LINGUISTICS: HUMAN LANGUAGE TECHNOLOGIES, 5 June 2015 (2015-06-05), pages 1569-1575, XP055445415, Stroudsburg, PA, USA DOI: 10.3115/v1/N15-1180

## Description

### TECHNICAL SECTOR

The present invention relates to a method and a system for creating an electronic signature of a document associated to a person by means of the voice print of the person, and to a corresponding method for verifying the electronic signature.

### PRIOR ART

In computer science, the electronic signature represents the set of data in electronic format included in other electronic data or else connected thereto via logical association and used by the signer for signing the other electronic data themselves (i.e., for subscribing them so as to confirm their authenticity).

The electronic signature may be based upon various technologies, amongst which the most widespread is public-key encryption (in which case typically the term "digital signature" is used in the case where all the requirements dictated by Italian law are met) .

A typical scheme of electronic signature based upon public key-technology consists of three algorithms: an algorithm for generation of the key, which produces a pair of keys, i.e., the public key for verification of the signature and the private key possessed by the signer and used for signing the document; a signature algorithm, which, having received at input a message and a private key, calculates the hash code of the message and, by encrypting the hash code of the message with the private key, produces a digital signature; and finally a verification algorithm, which, having received at input the message, the public key, and the digital signature, accepts or rejects the digital signature itself.

When a user wishes to create a signature for a document, he proceeds in the following way: with the aid of a (public) hash function, he derives the message digest of the document (i.e., a file of relatively small dimensions that contains a sort of check code regarding the document itself) and then uses its own private key and the message digest of the document for generating a new string using a purposely provided signature algorithm (for example, the RSA algorithm well known in the literature) : the result of this encoding is the digital signature. The hash function is made in such a way as to render minimum the likelihood of obtaining, from different texts, one and the same value of the message digest and is a one-way function (i.e., from the message digest it is impossible to obtain the original text again).

At this point, the signature is attached to the document together with the public key to create the so-called "digital-signature envelope". Anybody can verify authenticity of a document having available the digital signature, the document, and the public key; for carrying out verification, the message digest of the document is again calculated, and a signature-verification function is used that establishes with certainty whether the digital signature has been produced on the specific hash using the corresponding private key.

The ownership of the digital signature is guaranteed by the "certifiers" (which in Italy are regulated by Section II of the Legislative Decree No. 82/2005 and by the Regulation UE 910-2014 eIDAS), i.e., subjects with particular requirements of integrity and who may guarantee organizational, technical, and financial reliability.

In particular, the certifiers have the task of keeping the registers of the public keys in order to verify the ownership of the signature of the signer of an electronic document.

Acquisition of a pair of keys for the private subjects (a private key, entered in the secure signature device, and a public key, for the certificate) is normally by payment and requires the subscription of a contract with a certifier. It is clearly of fundamental importance that release will occur after prior certain identification of the signer on the part of the certifier for the association that the certificate makes between the public key and the demographic data of the owner of the signature to be certain.

Like an autographic signature on paper, also the digital signature can be disowned; i.e., subsequent non-acknowledgement on the part of the signer is not guaranteed; in other words, the signer could subsequently declare that the digital signature has been affixed against his or her will by a third party that in a more or less fraudulent way has gained possession of the private key.

The patent application No. US2004102959A1 describes a method for authentication of a file that envisages associating to the file an authentication voice sample of a user that indicates approval by the user of the content of the file.

The patent application No. US2015172286A1 constitutes the most recent state of the art and describes a method and a system for creating an electronic signature of a document associated to a person by means of the voice print of the person according to what is set down in the pre-characterizing part of the independent Claims 1 and 12.

In particular, the patent application No. US2015172286A1 describes a method comprising: determining a message digest of the document by means of a hash function (for example, *"7km3wa2k9jv8em395m7b3"),* recording the voice of the person for generating an authentication voice recording the person's voice while the person is reading out loud the initial part (for example, the first twelve characters, i.e., *"7km3wa2k9jv8"*) of the message digest of the document, and associating the authentication voice recording to the document.

However, reading of the message digest of the document (or of part of the message digest of the document) may be problematical for people not accustomed to reading alphanumeric codes out loud, and hence, may give rise to errors of interpretation (for example, reading out loud of the consonant "m" may be confused with reading out loud of the consonant "n", and vice versa), which might reduce the confidence in the authentication voice recording.

### DESCRIPTION OF THE INVENTION

The aim of the present invention is to provide a method and a system for creating an electronic signature of a document associated to a person by means of the voice print of the person and a corresponding method for verifying the electronic signature, said method and system for creating the electronic signature enabling increase of the confidence in the authentication voice recording.

According to the present invention, a method and a system for creating an electronic signature of a document associated to a person by means of the voice print of the person and a corresponding method for verifying the electronic signature are provided, according to what is specified in the annexed claims.

### BRIEF DESCRIPTION OF THE DRAWINGS

The present invention will now be described with reference to the attached drawings, which illustrate a non-limiting example of embodiment thereof and in which:
- Figure 1 is a schematic view of a person who electronically signs the contents of a document by means of the voice print in accordance with the method for creating an electronic signature according to the present invention;
- Figure 2 is a schematic view of implementation of the method for creating an electronic signature according to the present invention;
- Figure 3 is a schematic view of implementation of an association between the document and a voice recording through a conventional electronic signature; and
- Figure 4 is a schematic view of a cryptographic signature envelope obtained following upon the association of Figure 3.

### PREFERRED EMBODIMENTS OF THE INVENTION

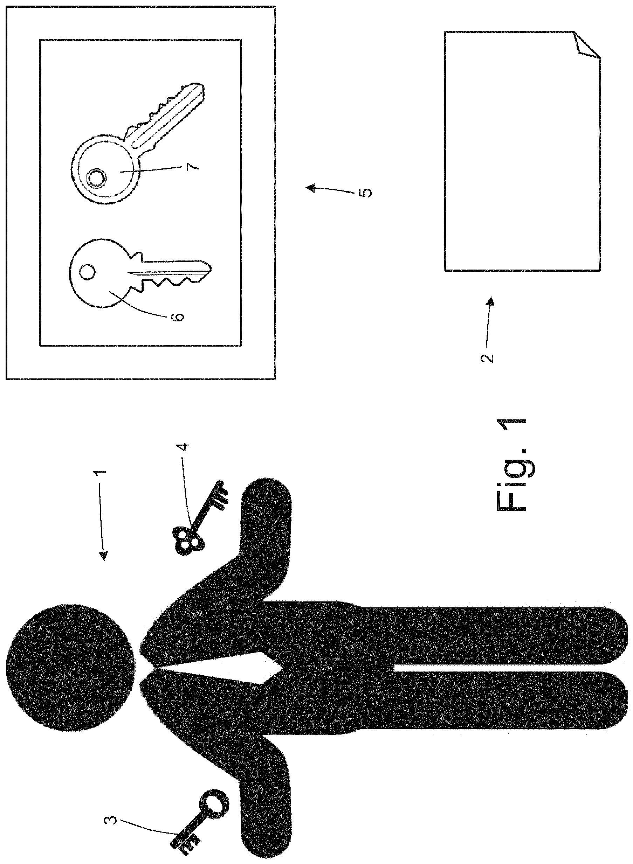

Designated by the reference number 1 in Figure 1 is a person who has to electronically sign an electronic document 2. The electronic document 2 may be constituted by any digital object to be undersigned (for example, a document in electronic format such as a contract of purchase, a multimedia file, a voice recording of a conversation, an electronic transaction, a token, etc.); in other words, by "electronic document 2" is meant any type of digital object to be undersigned.

To the person 1 there may be associated a private key 3 and a corresponding public key 4, which together form a system for asymmetrical encryption and are normally provided to the person 1 by a third-party certifier after prior verification of the identity of the person 1 (for example, the keys 3 and 4 are generated by the third-party certifier in SSCD - Secure Signature-Creation Device - and the third-party certifier provides a certificate, associating, via verification of identity, the public key 4 and the person 1); normally the two keys 3 and 4 are used by the person 1 for affixing, with modalities altogether known, a digital signature to an electronic document (hence the two keys 3 and 4 may potentially be used for affixing to the document 2, with modalities altogether known, the digital signature of the person 1).

In other words, the public key 4 and the private key 3 constitute digital-signature tools of the physical person 1; i.e., they "belong" to the person 1 and have been generated upon request of the person 1.

The two keys 3 and 4 are generated by a purposely provided algorithm with the guarantee that the private key 3 is the only one that is able to verify correctly the messages encrypted with the associated public key 4. The private key 3 has to be kept confidential (i.e., it must not be given or revealed to anybody) in so far as it must be used by the person 1 alone for decrypting the messages that he or she receives and for signing the messages that he or she sends; instead, the public key 4 is used by other users for encrypting the messages that they send to the person 1 and for verifying the digital signature of the person 1 and thus establishing the authenticity of the digital signature itself.

Generally, the private key 3 is stored in a physical device (typically a smart-card, but it could also be a mobile phone or else a computer server) owned by or available to the person 1, and there thus exists the real risk of a third party fraudulently gaining possession of the private key 3.

As will be described hereinafter, the use (and hence the presence) of the two keys 3 and 4 uniquely associated to the person 1 is not necessary for implementation of the present invention.

The service of generation of the electronic signature of the document 2 is provided by a service provider 5 (which may be the same certifier that has generated the two keys 3 and 4 uniquely associated to the person 1, or else may be another subject independent of the certifier that has generated the two keys 3 and 4) who possesses a private key 6 of its own and a corresponding public key 7, which together form a system for asymmetrical encryption; the service provider 5 may be an accredited certifier body or else might even not be an accredited certifier body. The two keys 6 and 7 are generated by a purposely provided algorithm of the service provider 5, with the guarantee that the private key 6 is the only one that is able to correctly decrypt the messages encrypted with the associated public key 7, and vice versa. In other words, the public key 7 and the private key 6 "belong" to the service provider 5, which uses them, as described hereinafter, for electronic signing of the document 2.

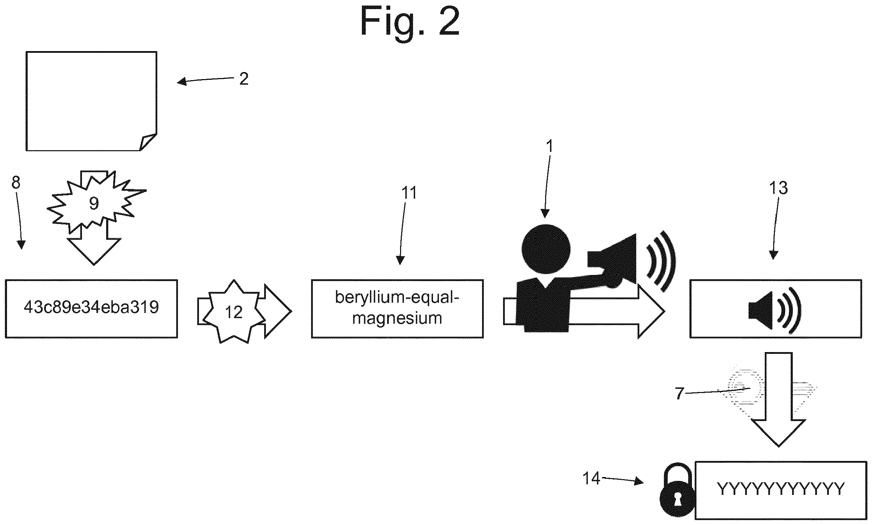

According to what is illustrated in Figure 2, the first step that is performed, after generation of the document 2 in electronic format, is to determine a message digest 8 of the document 2 by means of a hash function 9. In computer technology, a cryptographic hash function is a mathematical algorithm that transforms data of arbitrary length (document 2) into a binary string (the message digest 8) of a fixed size referred to as "hash value", "check-sum", or "message digest".

The hash algorithms that are used are made so as to render the likelihood of obtaining the same value of message digest from different texts statistically zero (i.e., the message digest is substantially unique for each text) and are one-way and hence not reversible (i.e., from the message digest it is practically impossible to obtain again the original text). By way of example, the hash function 9 that is used could be part of the family "SHA-2", for example the algorithm "SHA-256".

Next, a pronounceable alphanumeric sequence 11 is created starting from the message digest 8 of the document 2 and using a transformation algorithm 12. In other words, the message digest 8 of the document 2 is transformed (in a generally non-reversible way) by means of the transformation algorithm 12 into a pronounceable alphanumeric sequence 11 that corresponds to the message digest 8 itself and can be read easily by the person 1 (unlike the message digest 8, which is difficult to read).

According to a preferred embodiment, creation of the pronounceable alphanumeric sequence 11 starting from the message digest 8 of the document 2 envisages generating a list of words that to each possible byte of the message digest 8 of the document 2 associates a corresponding pronounceable word, and then replacing each byte of the message digest 8 of the document 2 with the corresponding pronounceable word of the list of words (consequently, the list of words is made up of 256 different words) .

Preferably, the message digest 8 is compressed to a fixed and pre-set number of bytes before each byte of the message digest 8 of the document 2 is replaced with the corresponding pronounceable word of the list of words. According to a possible embodiment, a number of lists of words in different languages may be provided in such a way as to allow the person 1 to choose the language that is most congenial.

It should be emphasised that various software tools are already available on the market (i.e., transformation algorithms 12) that transform a message digest (i.e., a hash string) into a pronounceable alphanumeric sequence (i.e., into a pronounceable string). By way of example, it is possible to use the software tool known as Humanhash that is available free of charge at the following address: *"https:*//*github.com*/*zacharyvoase*/*humanhash";* through this software tool the message digest: *"43c89e34eba31994be4fdcfb81994eb12dea99de7dd32003be4e80835c8eb* 894" obtained by means of the hash algorithm SHA-256 is transformed into the pronounceable alphanumeric sequence "beryllium-equal-magnesium". The software tool Humanhash guarantees a statistical uniqueness of the pronounceable alphanumeric sequence of approximately 1 out of 4.3 * 10⁹.

Once the pronounceable alphanumeric sequence 11 that corresponds to the message digest 8 of the document 2 has been generated, the person 1 is asked to read (obviously in a clearly audible way) the pronounceable alphanumeric sequence 11 into a microphone to generate a corresponding authentication voice recording 13 (in digital format, for example using the MP3 standard). According to a possible embodiment, the authentication voice recording 13 is subjected (in real time or delayed) to a voice-recognition procedure in order to reconstruct what has been said by the person 1 and verify that there exists a correspondence between what is said by the person 1 and the contents of the pronounceable alphanumeric sequence 11; in the event of (total or more probably partial) lack of correspondence, the person 1 is asked to read the pronounceable alphanumeric sequence 11 again. In this way, it is possible to correct any possible (more or less involuntary) reading errors committed by the person 1 in reading out loud the pronounceable alphanumeric sequence 11.

The authentication voice recording 13 is associated to the document 2 in electronic format as proof that the document 2 itself has been signed precisely by the person 1 who is effectively present and not by a third party. According to a preferred (but non-binding) embodiment, the authentication voice recording 13 is encrypted using the public key 7 of the service provider 5 that provides the electronic-signature service in order to create an encrypted authentication voice recording 14; according to a different (obviously non-binding) embodiment, in order to create the encrypted authentication voice recording 14, the authentication voice recording 13 could be encrypted using the public key 4 of the person 1, or else using any other encryption key of the person 1 different from the keys 3 and 4.

It should be emphasised that there should preferably (but not obligatorily) be cryptographically guaranteed (for example, with the digital signature of a third party, a time stamp, the digital signature of the person 1, etc.) association between the document 2 and the encrypted authentication voice recording 14 (or, alternatively, the authentication voice recording 13) in such a way that there is no doubt about the fact that the encrypted authentication voice recording 14 (or, alternatively, the authentication voice recording 13) associated to the document 2 will not be modified after association to the document 2 itself.

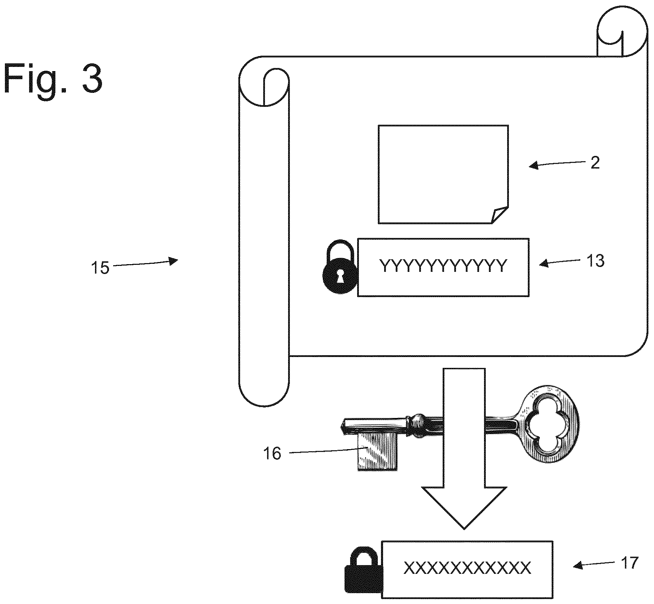

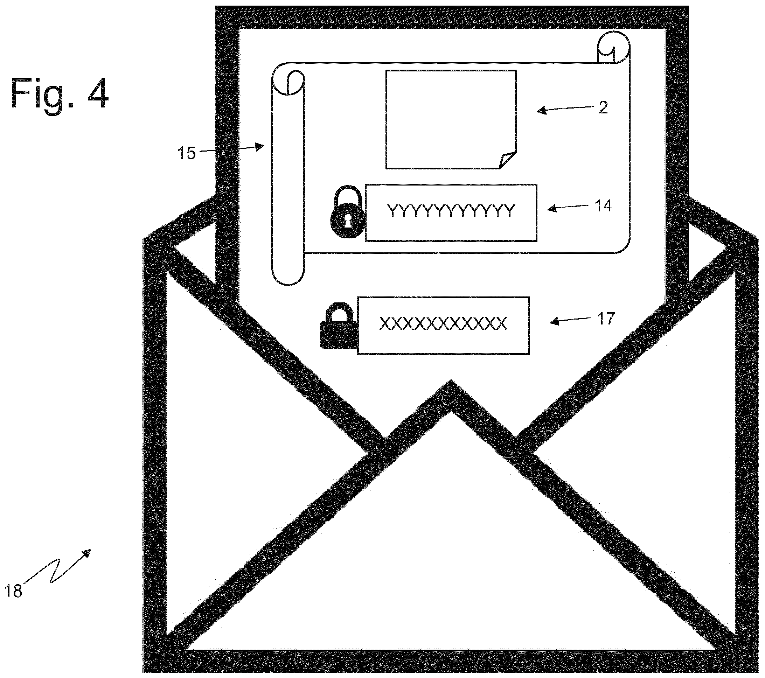

According to a preferred (but non-binding) embodiment illustrated in Figures 3 and 4, association between the encrypted authentication voice recording 14 (or, alternatively, the authentication voice recording 13) and the document 2 is obtained by means of a digital signature. In other words, association between the encrypted authentication voice recording 14 (or, alternatively, the authentication voice recording 13) and the document 2 is obtained by entering the encrypted authentication voice recording 14 (or, alternatively, the authentication voice recording 13) into a so-called signed attribute of a digital signature of the document 2.

For instance, the document 2 and the encrypted authentication voice recording 14 (or, alternatively, the authentication voice recording 13) are gathered together in a new cumulative document 15 that is electronically signed by means of a private key 16 so as to obtain a digital signature 17 and hence generate a cryptographic signature envelope 18 (for example, a file with extension "p7m") containing the cumulative document 15 (i.e., the document 2 and the encrypted authentication voice recording 14, as illustrated in Figure 4), the digital signature 17, the attributes, and the certificate.

According to a preferred embodiment, the private key 16 used for creating the digital signature 17 is independent of the public key 7 with which the authentication voice recording 13 is encrypted; namely, the private key 16 used for creating the digital signature 17 has no functional correlation with the public key 7 with which the authentication voice recording 13 is encrypted.

According to a possible embodiment, the private key 16 used for creating the digital signature 17 belongs to the service provider 5; alternatively, the private key 16 used for creating the digital signature 17 belongs to the person 1.

In the preferred embodiment described above, the person 1 is asked to read an alphanumeric sequence out loud (i.e., the pronounceable alphanumeric sequence 11), which is derived from the message digest 8 and is different from the message digest 8 itself. According to an alternative embodiment, the person 1 could be asked to read out loud the message digest 8 directly (i.e., the step of generating the pronounceable alphanumeric sequence 11 is skipped); in fact, the message digest 8 is complex and long, but not impossible, to read for the physical person 1.

In the preferred embodiment described above, the encrypted authentication voice recording 14 (encrypted by means of the public key 7) is created and associated to the document 2. According to an alternative embodiment, the non-encrypted authentication voice recording 13 (which can be freely consulted by anyone since it does not have any type of encryption) is created and associated to the document 2.

Generally, the public key 4 and the private key 3 (obviously when envisaged) is generated before generation of the electronic signature of the document 2 and can be used by the person 1 also for electronic signing of other documents. Likewise, also the public key 6 and the private key 7 (obviously when envisaged) are generated before generation of the electronic signature of the document 2 and are used by the service provider 5 also for electronic signing of other documents. In the same way, also the private key 16 (obviously when envisaged) is generated before generation of the electronic signature of the document 2 and is used by the service provider 5 or by the person 1 (according to who owns the key 16) also for electronic signing of other documents.

According to a preferred embodiment, the authentication voice recording 13 (which, in the case of previous encryption, is obtained by decrypting the encrypted authentication voice recording 14 using the private key 6 of the service provider 5) is used in a subsequent verification step or else in the case where the authenticity of the electronic signature is called into doubt, i.e., in the case where the person 1 disowns the electronic signature.

If the person 1 can be reached, he or she is asked to read the pronounceable alphanumeric sequence 11 out loud again to create a comparison voice recording with which to compare the authentication voice recording 13 in order to verify whether the two voice recordings come from the same person, i.e., whether they have the same voice print (obviously, the comparison voice recording may comprise reading of any other type of text in addition to or instead of the pronounceable alphanumeric sequence 11); this comparison may be made by means of a software and/or by means of an expert (in particular, when the verification is required by a judicial authority).

If the person 1 cannot be reached, it is possible to use, for the comparison, a comparison voice recording that has been acquired previously by having the person 1 read a standard text out loud (obviously designed to provide a complete and exhaustive picture of the voice print of the physical person 1); this comparison voice recording may be recorded and stored at the moment of generation of the private key 3 and of the public key 4, or else (more probably) may be recorded and stored at a moment completely separate from the moment of generation of the private key 3 and public key 4 (which, as has already been said, might even not exist).

It is certainly preferable, even though not strictly compulsory, for the comparison voice recording to be acquired, at the latest, at the moment of creation of the electronic signature in so far as, after creation of the electronic signature, the person 1 might no longer be traceable (whether by choice or for reasons of *force majeure*) or, if person 1 is traceable, he or she might not be available (whether by choice or for reasons of *force majeure*) to provide the comparison voice recording.

It should be noted that the voice print is the set of the features of the voice of an individual that enable identification thereof. Even though there is no agreement on what might be an exhaustive set of such features, some measurements are known that are able to characterize reasonably single individuals in sufficiently limited groups of individuals (for example, a few hundred).

According to a possible embodiment, prior to signing of the document 2 (for example, but not exclusively, simultaneously with generation of the private key 3 and public key 4 of the physical person 1) a comparison voice recording is also recorded and stored by having the person 1 read out loud a standard text. This comparison voice recording may be used when it is necessary to verify the originality of the authentication voice recording 13 acquired at the moment of electronic signing of the document 2. According to a possible embodiment, a comparison may always be made (using appropriate software) between the authentication voice recording 13 and the comparison voice recording at the moment of signing of the document 2 to verify preliminarily (and independently of subsequent challenges) whether there exists an (at least acceptable) correspondence between the voice print of the authentication voice recording 13 and the voice print of the comparison voice recording. Obviously, in the event of lack of correspondence between the voice print of the authentication voice recording 13 and the voice print of the comparison voice recording, electronic signing of the document 2 is suspended awaiting further verifications. In this way, the possibility of the electronic signature being generated in a fraudulent way by a third party who has unlawfully gained possession of the private key 3 of the physical person 1 is significantly reduced (if not practically ruled out).

In the embodiment described above, the authentication voice recording 13 is associated to the document 2 in electronic format by means of asymmetrical encryption (i.e., using an electronic signature) in so far as asymmetrical encryption is an extremely widespread system. However, it is evident that the authentication voice recording 9 may be associated to the document 2 in electronic format by using any other type of system of association other than asymmetrical encryption.

The modalities described above for electronic signing of the document 2 may normally be achieved using more or less automated (i.e., more or less autonomous) software tools. In other words, the entire process of acquisition of the electronic signature of the document 2 may involve only the person 1 who interfaces with a software tool, or else may also involve a human supervisor (typically remotely connected) who controls the process (even without intervening directly if not in the case of difficulties) .

To sum up what has been set forth above, the electronic signature that is created through acquisition of the authentication voice recording 13 may be an advanced electronic signature, a qualified electronic signature, or else an digital electronic signature; the discriminant is linked to the modalities of verification of the identity of the person 1 (i.e., to the modalities of enrolment) before creation of the electronic signature, i.e., whether prior to creation of the electronic signature the identity of the person 1 has or has not been verified and, if it has been verified, whether the identity of the person 1 has been verified in a more or less reliable way. The method for creating an electronic signature described above presents numerous advantages.

In the first place, the method for creating an electronic signature described above enables a significant increase in the confidence in the electronic signature in so far as the validation process is significantly improved. In fact, whereas it is possible for a third party to gain possession of the private key 3 of the person 1, it is extremely difficult, if not practically impossible, for a third party to be able to reproduce in an extremely faithful way the voice print of the physical person 1. In other words, the traditional electronic signature is integrated, if not replaced, with a content (the authentication voice recording 13) that derives directly from biometric data of the physical person 1.

Furthermore, the method for creating an electronic signature described above is particularly safe in so far as the biometric datum of the person 1 (i.e., the person's voice print) is not extracted in itself (as occurs, for example, with fingerprints or iris scans) and hence is always the same for all the electronic signatures, but is "personalized" for the document 2 in so far as the person 1 is asked to read out loud a text (the pronounceable alphanumeric sequence 11) that derives directly from the message digest 8 of the document 2 and hence (substantially) changes even in the case of minor modifications to the document 2 itself. Consequently, the authentication voice recording 13 of a document 2 can in no way be used for another (even slightly) different document 2.

It should be noted that the voice print is extremely competitive on the commercial plane as compared to other biometric technologies (for example, fingerprints) in so far as the even very accurate detection of the voice print avails itself of standard tools (ordinary microphones) and does not require specific equipment. Moreover, the recording of the voice of a person is a common and widespread method that is never perceived as "invasive" of the sphere of privacy of the person and is hence always readily accepted. Instead, acquisition of the fingerprints is frequently associated to police checks (historically fingerprints were acquired in the event of arrest) and is thus frequently perceived as "invasive" of the sphere of privacy of the person.

## Claims

1. A method for creating an electronic signature of a document (2) associated to a person (1) by means of the voice print of the person (1); said creation method comprises the steps of:
generating the document (2) in electronic format;
determining a message digest (8) of the document (2) by means of a hash function (9);
generating a list of words that associates to each possible byte of the message digest (8) of the document (2) a corresponding pronounceable word;
creating a pronounceable alphanumeric sequence (11) starting from the message digest (8) of the document (2) by replacing each byte of the message digest (8) of the document (2) with the corresponding pronounceable word of the list of words;
recording the voice of the person (1) for generating an authentication voice recording (13) while the person (1) reads out loud the pronounceable alphanumeric sequence (11);
associating the authentication voice recording (13) to the document (2) in electronic format;
the creation method is **characterized in that** it comprises the further step of compressing the message digest (8) to a fixed and pre-set number of bytes before replacing each byte of the message digest (8) of the document (2) with the corresponding pronounceable word of the list of words.

2. The creation method according to Claim 1 and comprising the further steps of:
Subjecting, in real time or delayed, the authentication voice recording (13) to a voice-recognition procedure in order to reconstruct what has been said by the person (1);
verifying that there exists a correspondence between what is said by the person (1) and the contents of the pronounceable alphanumeric sequence (11); and
asking the person (1), in the event of total or partial lack of correspondence, to read the pronounceable alphanumeric sequence (11) again.

3. The creation method according to Claim 1 or 2 and comprising the further step acquiring, at the latest at the moment of creation of the electronic signature, a comparison voice recording by having the person (1) read a standard text out loud.

4. The creation method according to Claim 1, 2 or 3 and comprising the further step of encrypting the authentication voice recording (13) before associating the authentication voice recording (13) to the document (2) in electronic format in such a way as to associate to the document (2) in electronic format an encrypted authentication voice recording (14).

5. The creation method according to Claim 4 and comprising the further step of encrypting the authentication voice recording (13) by means of a public key (7) belonging to a service provider (5) or else by means of a public key (4) belonging to the person (1), for carrying out an asymmetrical encryption of the authentication voice recording (13).

6. The creation method according to any one of Claims 1 to 5 and comprising the further step of using an electronic signature (17) for associating the authentication voice recording (13) to the document (2).

7. The creation method according to Claim 6 and comprising the further step of creating a cryptographic signature envelope (18) containing the document (2) and the authentication voice recording (13).

8. The creation method according to Claim 6 or 7 and comprising the further step of encrypting the authentication voice recording (13) by means of a public key (7; 4) that is not functionally correlated to a private key (16) used for generating the electronic signature that associates the authentication voice recording (13) to the document (2).

9. The creation method according to any one of Claims 1 to 8, wherein the association between the document (2) and the authentication voice recording (13) is guaranteed cryptographically.

10. Method for creating an electronic signature according to any of claims 1 to 9, further comprising a verification method; said verification method comprises the steps of:
extracting an authentication voice recording (13) associated to the document (2);
obtaining a comparison voice recording created by recording the voice of the person (1); and
comparing the authentication voice recording (13) with the comparison voice recording in order to verify whether the two voice recordings come from the same person, i.e., whether they have the same voice print.

11. Method according to Claim 10 and comprising the further step of obtaining the comparison voice recording by having the person (1) read out loud a message digest (8) of the document (2) or another alphanumeric sequence derived from the message digest (8) itself used during creation of the electronic signature.

12. Method according to Claim 10 and comprising the further step of obtaining the comparison voice recording by having the person (1) read out loud a standard text different from a message digest (8) of the document (2) or from another alphanumeric sequence derived from the message digest (8) itself used during creation of the electronic signature.

13. A system for creating an electronic signature of a document (2) associated to a person (1) by means of the voice print of the person (1); said creation system comprises:
a first device for receiving the document (2) in electronic format;
a second device for determining a message digest (8) of the document (2) by means of a hash function (9); wherein the second device contains a list of words that associates to each possible byte of the message digest (8) of the document (2) a corresponding pronounceable word; wherein the second device creates a pronounceable alphanumeric sequence (11) starting from the message digest (8) of the document (2) by replacing each byte of the message digest (8) of the document (2) with the corresponding pronounceable word of the list of words;
a third device for recording the voice of the person (1) so as to generate an authentication voice recording (13) while the person (1) reads out loud the pronounceable alphanumeric sequence (11) derived from the message digest (8) itself; and
a fourth device for associating the authentication voice recording (13) to the document (2) in electronic format;
the creation system is **characterized in that** the second device compresses the message digest (8) to a fixed and pre-set number of bytes before replacing each byte of the message digest (8) of the document (2) with the corresponding pronounceable word of the list of words.

## Patentansprüche

1. Verfahren zum Erstellen einer elektronischen Signatur eines Dokuments (2), das einer Person (1) zugeordnet ist, mittels des Stimm- bzw. Sprachabdrucks der Person (1); wobei das Erstellungsverfahren die Schritte umfasst:
Generieren des Dokuments (2) in elektronischem Format;
Bestimmen eines Message Digest bzw. einer Nachrichten-Kurzfassung (8) des Dokuments (2) mittels einer Hash-Funktion (9);
Generieren einer Liste von Wörtern, die jedem möglichen Byte des Message Digest (8) des Dokuments (2) ein entsprechendes aussprechbares Wort zuordnet;
Erstellen einer aussprechbaren alphanumerischen Sequenz (11) ausgehend von dem Message Digest (8) des Dokuments (2) durch Ersetzen jedes Bytes des Message Digest (8) des Dokuments (2) durch das entsprechende aussprechbare Wort der Liste von Wörtern;
Aufzeichnen der Stimme bzw. Sprache der Person (1) zum Generieren einer Authentifizierungsstimm- bzw. -sprachaufzeichnung (13), während die Person (1) die aussprechbare alphanumerische Sequenz (11) laut vorliest;
Zuordnen der Authentifizierungssprachaufzeichnung (13) zu dem Dokument (2) in elektronischem Format;
wobei das Erstellungsverfahren **dadurch gekennzeichnet ist, dass** es den weiteren Schritt des Komprimierens des Message Digest (8) auf eine feste und voreingestellte Anzahl von Bytes umfasst, bevor jedes Byte des Message Digest (8) des Dokuments (2) durch das entsprechende aussprechbare Wort der Liste von Wörtern ersetzt wird.

2. Erstellungsverfahren nach Anspruch 1 und umfassend die weiteren Schritte:
Unterziehen der Authentifizierungssprachaufzeichnung (13) in Echtzeit oder verzögert einem Spracherkennungsverfahren, um zu rekonstruieren, was von der Person (1) gesagt wurde;
Verifizieren, ob eine Entsprechung zwischen dem durch die Person (1) Gesagten und dem Inhalt der aussprechbaren alphanumerischen Sequenz (11) besteht; und
Bitten der Person (1), in dem Fall eines vollständigen oder teilweisen Fehlens an Entsprechung, die aussprechbare alphanumerische Folge (11) erneut zu lesen.

3. Erstellungsverfahren nach Anspruch 1 oder 2 und umfassend den weiteren Schritt des Erfassens, spätestens zum Zeitpunkt der Erstellung der elektronischen Signatur, einer Vergleichsstimm- bzw. -sprachaufzeichnung, indem man die Person (1) einen Standardtext laut vorlesen lässt.

4. Erstellungsverfahren nach Anspruch 1, 2 oder 3 und umfassend den weiteren Schritt des Verschlüsselns der Authentifizierungssprachaufzeichnung (13), bevor die Authentifizierungssprachaufzeichnung (13) dem Dokument (2) in elektronischem Format zugeordnet wird, und zwar auf eine solche Weise, dass dem Dokument (2) in elektronischem Format eine verschlüsselte Authentifizierungssprachaufzeichnung (14) zugeordnet wird.

5. Erstellungsverfahren nach Anspruch 4 und umfassend den weiteren Schritt des Verschlüsselns der Authentifizierungssprachaufzeichnung (13) mittels eines öffentlichen Schlüssels (7), der einem Dienstanbieter (5) gehört, oder auch mittels eines öffentlichen Schlüssels (4), welcher der Person (1) gehört, um eine asymmetrische Verschlüsselung der Authentifizierungssprachaufzeichnung (13) durchzuführen.

6. Erstellungsverfahren nach einem der Ansprüche 1 bis 5 und umfassend den weiteren Schritt des Verwendens einer elektronischen Signatur (17) zum Zuordnen der Authentifizierungssprachaufzeichnung (13) zu dem Dokument (2).

7. Erstellungsverfahren nach Anspruch 6 und umfassend den weiteren Schritt des Erstellens eines kryptografischen Signaturumschlags bzw. Signatur-Envelope (18), der das Dokument (2) und die Authentifizierungssprachaufzeichnung (13) enthält.

8. Erstellungsverfahren nach Anspruch 6 oder 7 und umfassend den weiteren Schritt des Verschlüsselns der Authentifizierungssprachaufzeichnung (13) mittels eines öffentlichen Schlüssels (7; 4), der nicht funktional mit einem privaten Schlüssel (16) korreliert, der zum Generieren der elektronischen Signatur verwendet wird, welche die Authentifizierungssprachaufzeichnung (13) dem Dokument (2) zuordnet.

9. Erstellungsverfahren nach einem der Ansprüche 1 bis 8, wobei die Zuordnung zwischen dem Dokument (2) und der Authentifizierungssprachaufzeichnung (13) kryptographisch garantiert wird.

10. Verfahren zum Erstellen einer elektronischen Signatur nach einem der Ansprüche 1 bis 9, ferner umfassend ein Verifizierungsverfahren, wobei das Verifizierungsverfahren die Schritte umfasst:
Extrahieren einer dem Dokument (2) zugeordneten Authentifizierungsstimm- bzw. -sprachaufzeichnung (13);
Erhalten einer Vergleichsstimm- bzw. -sprachaufzeichnung, die durch Aufzeichnen der Stimme bzw. Sprache der Person (1) erstellt wird; und
Vergleichen der Authentifizierungssprachaufzeichnung (13) mit der Vergleichssprachaufzeichnung, um zu verifizieren, ob die beiden Sprachaufzeichnungen von derselben Person stammen, d. h. ob sie denselben Stimm- bzw. Sprachdruck aufweisen.

11. Verfahren nach Anspruch 10 und umfassend den weiteren Schritt des Erhaltens der Vergleichssprachaufzeichnung, indem man die Person (1) einen Message Digest bzw. eine Nachrichten-Kurzfassung (8) des Dokuments (2) oder eine andere aus dem Message Digest (8) selbst abgeleitete alphanumerische Sequenz laut vorlesen lässt, der während der Erstellung der elektronischen Signatur verwendet wird.

12. Verfahren nach Anspruch 10 und umfassend den weiteren Schritt des Erhaltens der Vergleichssprachaufzeichnung, indem man die Person (1) einen Standardtext vorlesen lässt, der sich von einem Message Digest (8) des Dokuments (2) oder von einer anderen alphanumerischen Sequenz unterscheidet, die aus dem Message Digest (8) selbst abgeleitet wird, der während der Erstellung der elektronischen Signatur verwendet wird.

13. System zum Erstellen einer elektronischen Signatur eines Dokuments (2), das einer Person (1) zugeordnet ist, mittels des Stimm- bzw. Sprachabdrucks der Person (1); wobei das Erstellungssystem umfasst:
eine erste Vorrichtung zum Empfangen des Dokuments (2) in elektronischem Format;
eine zweite Vorrichtung zum Bestimmen eines Message Digest bzw. einer Nachrichten-Kurzfassung (8) des Dokuments (2) mittels einer Hash-Funktion (9); wobei die zweite Vorrichtung eine Liste von Wörtern enthält, die jedem möglichen Byte des Message Digest (8) des Dokuments (2) ein entsprechendes aussprechbares Wort zuordnet; wobei die zweite Vorrichtung eine aussprechbare alphanumerische Sequenz (11) ausgehend von dem Message Digest (8) des Dokuments (2) durch Ersetzen jedes Bytes des Message Digest (8) des Dokuments (2) durch das entsprechende aussprechbare Wort der Liste von Wörtern erstellt;
eine dritte Vorrichtung zum Aufzeichnen der Stimme bzw. Sprache der Person (1), um eine Authentifizierungsstimm- bzw. -sprachaufzeichnung (13) zu generieren, während die Person (1) die aussprechbare alphanumerische Sequenz (11) laut vorliest; und
eine vierte Vorrichtung zum Zuordnen der Authentifizierungssprachaufzeichnung (13) zu dem Dokument (2) in elektronischem Format;
wobei das Erstellungssystem **dadurch gekennzeichnet ist, dass** die zweite Vorrichtung den Message Digest (8) auf eine feste und voreingestellte Anzahl von Bytes komprimiert, bevor jedes Byte des Message Digest (8) des Dokuments (2) durch das entsprechende aussprechbare Wort der Liste von Wörtern ersetzt wird.

## Revendications

1. Procédé pour créer une signature électronique d'un document (2) associé à une personne (1) au moyen de l'empreinte vocale de la personne (1) ; ledit procédé de création comprend les étapes consistant à :
générer le document (2) sous format électronique ;
déterminer un condensé de message (8) du document (2) au moyen d'une fonction de hachage (9) ;
générer une liste de mots qui associe, à chaque octet possible du condensé de message (8) du document (2), un mot prononçable correspondant ;
créer une séquence alphanumérique prononçable (11) à partir du condensé de message (8) du document (2) en remplaçant chaque octet du condensé de message (8) du document (2) par le mot prononçable correspondant de la liste de mots ;
enregistrer la voix de la personne (1) pour générer un enregistrement vocal d'authentification (13) tandis que la personne (1) lit à haute voix la séquence alphanumérique prononçable (11) ;
associer l'enregistrement vocal d'authentification (13) au document (2) sous format électronique ;
le procédé de création est **caractérisé en ce qu'**il comprend l'étape supplémentaire consistant à compresser le condensé de message (8) à un nombre fixe et prédéfini d'octets avant de remplacer chaque octet du condensé de message (8) du document (2) par le mot prononçable correspondant de la liste de mots.

2. Procédé de création selon la revendication 1 et comprenant les étapes supplémentaires consistant à :
soumettre, en temps réel ou en différé, l'enregistrement vocal d'authentification (13) à une procédure de reconnaissance vocale afin de reconstituer ce qui a été dit par la personne (1) ;
vérifier qu'il existe une correspondance entre ce qui est dit par la personne (1) et le contenu de la séquence alphanumérique prononçable (11) ; et
demander à la personne (1), en cas d'absence totale ou partielle de correspondance, de relire encore la séquence alphanumérique prononçable (11).

3. Procédé de création selon la revendication 1 ou 2 et comprenant l'étape supplémentaire consistant à acquérir, au plus tard au moment de la création de la signature électronique, un enregistrement vocal de comparaison en faisant lire à haute voix, par la personne (1), un texte standard.

4. Procédé de création selon la revendication 1, 2 ou 3 et comprenant l'étape supplémentaire consistant à crypter l'enregistrement vocal d'authentification (13) avant d'associer l'enregistrement vocal d'authentification (13) au document (2) sous format électronique de manière à associer au document (2), sous format électronique, un enregistrement vocal d'authentification crypté (14).

5. Procédé de création selon la revendication 4 et comprenant l'étape supplémentaire consistant à crypter l'enregistrement vocal d'authentification (13) au moyen d'une clé publique (7) appartenant à un fournisseur de services (5) ou bien au moyen d'une clé publique (4) appartenant à la personne (1), pour effectuer un cryptage asymétrique de l'enregistrement vocal d'authentification (13).

6. Procédé de création selon l'une quelconque des revendications 1 à 5 et comprenant l'étape supplémentaire consistant à utiliser une signature électronique (17) pour associer l'enregistrement vocal d'authentification (13) au document (2).

7. Procédé de création selon la revendication 6 et comprenant l'étape supplémentaire consistant à créer une enveloppe de signature cryptographique (18) contenant le document (2) et l'enregistrement vocal d'authentification (13).

8. Procédé de création selon la revendication 6 ou 7 et comprenant l'étape supplémentaire consistant à crypter l'enregistrement vocal d'authentification (13) au moyen d'une clé publique (7 ; 4) qui n'est pas fonctionnellement corrélée à une clé privée (16) utilisée pour générer la signature électronique qui associe l'enregistrement vocal d'authentification (13) au document (2).

9. Procédé de création selon l'une quelconque des revendications 1 à 8, dans lequel l'association entre le document (2) et l'enregistrement vocal d'authentification (13) est garantie par cryptographie.

10. Procédé pour créer une signature électronique selon l'une des revendications 1 à 9, comprenant en outre un procédé de vérification ; ledit procédé de vérification comprend les étapes consistant à :
extraire un enregistrement vocal d'authentification (13) associé au document (2) ;
obtenir un enregistrement vocal de comparaison créé en enregistrant la voix de la personne (1) ; et
comparer l'enregistrement vocal d'authentification (13) avec l'enregistrement vocal de comparaison afin de vérifier si les deux enregistrements vocaux proviennent de la même personne, c'est-à-dire s'ils ont la même empreinte vocale.

11. Procédé selon la revendication 10 et comprenant l'étape supplémentaire consistant à obtenir l'enregistrement vocal de comparaison en faisant lire à haute voix, par la personne (1), un condensé de message (8) du document (2) ou une autre séquence alphanumérique dérivée du condensé de message (8) lui-même utilisé lors de la signature électronique.

12. Procédé selon la revendication 10 et comprenant l'étape supplémentaire consistant à obtenir l'enregistrement vocal de comparaison en faisant lire à haute voix, par la personne (1), un texte standard différent d'un condensé de message (8) du document (2) ou provenant d'une autre séquence alphanumérique dérivée du condensé de message (8) lui-même utilisé lors de la création de la signature électronique.

13. Système pour créer une signature électronique d'un document (2) associé à une personne (1) au moyen de l'empreinte vocale de la personne (1) ; ledit système de création comprend :
un premier dispositif pour recevoir le document (2) sous format électronique ;
un deuxième dispositif pour déterminer un condensé de message (8) du document (2) au moyen d'une fonction de hachage (9) ; dans lequel le deuxième dispositif contient une liste de mots qui associe, à chaque octet possible du condensé de message (8) du document (2), un mot prononçable correspondant ; dans lequel le deuxième dispositif crée une séquence alphanumérique prononçable (11) à partir du condensé de message (8) du document (2) en remplaçant chaque octet du condensé de message (8) du document (2) par le mot prononçable correspondant de la liste de mots ;
un troisième dispositif pour enregistrer la voix de la personne (1) de manière à générer un enregistrement vocal d'authentification (13) tandis que la personne (1) lit à haute voix la séquence alphanumérique prononçable (11) dérivée du condensé de message (8) lui-même ; et
un quatrième dispositif pour associer l'enregistrement vocal d'authentification (13) au document (2) sous format électronique ;
le système de création est **caractérisé en ce que** le deuxième dispositif compresse le condensé de message (8) à un nombre fixe et prédéfini d'octets avant de remplacer chaque octet du condensé de message (8) du document (2) par le mot prononçable correspondant de la liste de mots.
